# EUROPEAN PATENT APPLICATION

(11) **EP 4 827 203 A1**
(43) Date of publication of application: **21.10.2026**
(21) Application number: 24903500.7
(22) Date of filing: 27.11.2024
(51) Int. Cl.: H04W 72/0457, H04W 72/50, H04W 72/542, H04W 84/12

(54) **COMMUNICATION DEVICE AND COMMUNICATION METHOD**

(30) Priority: 15.12.2023 JP 2023212404
(71) Applicant: Panasonic Intellectual Property Management Co., Ltd., Kadoma-shi, Osaka 571-0057 (JP)
(72) Inventor: OOI, Kenji, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2024/041965
(87) International publication number: WO 2025/126842

(57) **Abstract**

This communication device comprises: a communication unit that has a first communication scheme for transmitting different frames on a plurality of links having different frequency bands and a second communication scheme for transmitting frames which are the same; and a control unit that switches between the first communication scheme and the second communication scheme on the basis of the communication quality on each of the plurality of links.

## Description

### Technical Field

The present disclosure relates to a communication apparatus and a communication method.

### Background Art

IEEE 802.11be is being developed as the next-generation standard for wireless LAN. Multi-link operation (MLO) is one of the technologies used in IEEE 802.11be. In existing Wi Fi (registered trademark), one terminal device (also referred to as non-AP STA or simply STA) communicates with a base station (also referred to as AP) using one frequency band; however, in MLO, one terminal device (also referred to as non-AP MLD) communicates with one base station (also referred to as AP MLD) using a plurality of frequency bands. A non-AP MLD is a device that integrates STAs of a plurality of frequency bands, and an AP MLD is a device that integrates APs of a plurality of frequency bands. Note that LAN is an abbreviation for local area network. IEEE is an abbreviation for Institute of Electrical and Electronics Engineers. MLO is an abbreviation for multilink operation. STA is an abbreviation for station. AP is an abbreviation for access point. MLD is an abbreviation for multi-link device. In the following description, a non-AP MLD may be simply referred to as an STA, and an AP MLD may be simply referred to as an AP. In the context of MLO, an STA may be interpreted as a non-AP MLD, and an AP may be interpreted as an AP MLD.

Patent Literature (hereinafter, referred to as PTL) 1 proposes an AP apparatus that efficiently implements MLO in a wireless LAN system in which MLO is applied to various use cases.

### Citation List

### Patent Literature

PTL 1
Japanese Patent Application Laid-Open No. 2023-99242

### Summary of Invention

In MLO, communication is performed using a plurality of frequency bands. Accordingly, the communication quality of MLO may differ among the plurality of frequency bands, and the transmission efficiency in a certain frequency band may decrease. In MLO, it is desired to suppress a decrease in transmission efficiency across all frequency bands even when the transmission efficiency in a certain frequency band decreases.

A non-limiting embodiment of the present disclosure facilitates providing a communication apparatus and a communication method that each suppress a decrease in transmission efficiency in MLO.

A communication apparatus according to an embodiment of the present disclosure includes: a communicator, which in operation, includes a first communication scheme for transmitting different frames on a plurality of links in different frequency bands, and a second communication scheme for transmitting identical frames on the plurality of links in different frequency bands; and a controller, which in operation, switches between the first communication scheme and the second communication scheme based on communication quality on each of the plurality of links.

A communication method according to an embodiment of the present disclosure includes: including, by a communication apparatus, a first communication scheme for transmitting different frames on a plurality of links in different frequency bands, and a second communication scheme for transmitting identical frames on the plurality of links in different frequency bands; and switching, by the communication apparatus, between the first communication scheme and the second communication scheme based on communication quality on each of the plurality of links.

It should be noted that general or specific embodiments may be implemented as a system, an apparatus, a method, an integrated circuit, a computer program, a storage medium, or any selective combination thereof.

According to an embodiment of the present disclosure, a decrease in transmission efficiency in MLO can be suppressed.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[FIG. 1] FIG. 1 is a diagram illustrating a configuration example of a radio system according to an embodiment of the present disclosure:
[FIG. 2] FIG. 2 is a diagram for describing MLO;
[FIG. 3] FIG. 3 is a diagram for describing an aggregation scheme in MLO;
[FIG. 4] FIG. 4 is a diagram for describing a duplication scheme in MLO;
[FIG. 5] FIG. 5 is a diagram illustrating a relationship between frequency bands and transmission distance/transmission capacity;
[FIG. 6] FIG. 6 is a diagram illustrating a relationship between frequency bands and transmission distance/transmission capacity;
[FIG. 7] FIG. 7 is a diagram for describing degradation of communication quality;
[FIG. 8] FIG. 8 is a diagram for describing switching of communication scheme based on signal strength;
[FIG. 9] FIG. 9 is a diagram for describing switching of communication scheme when signal strength decreases according to transmission distance;
[FIG. 10] FIG. 10 is a diagram for describing switching of communication scheme when signal strength decreases according to transmission distance;
[FIG. 11] FIG. 11 is a diagram for describing switching of communication scheme based on transmission delay;
[FIG. 12] FIG. 12 is a diagram for describing switching of communication scheme based on transmission rate;
[FIG. 13] FIG. 13 is a diagram for describing multi-stage switching of communication scheme;
[FIG. 14] FIG. 14 is a diagram for describing Part 1 of processing layers;
[FIG. 15] FIG. 15 is a diagram for describing Part 2 of processing layers;
[FIG. 16] FIG. 16 is a diagram for describing Part 3 of processing layers; and
[FIG. 17] FIG. 17 is a diagram illustrating an exemplary hardware configuration of a base station.

### Description of Embodiments

Hereinafter, an embodiment of the present disclosure will be described in detail with reference to the drawings as appropriate. However, a detailed description more than necessary may be omitted. For example, detailed descriptions of well-known matters and redundant descriptions of substantially the same configuration may be omitted. This is to avoid the unnecessary redundancy of the following description and to facilitate understanding of those skilled in the art.

Note that, the accompanying drawings and the following description are provided so that those skilled in the art understand the present embodiment sufficiently, and are not intended to limit the subject matters recited in the claims.

### <System Configuration>

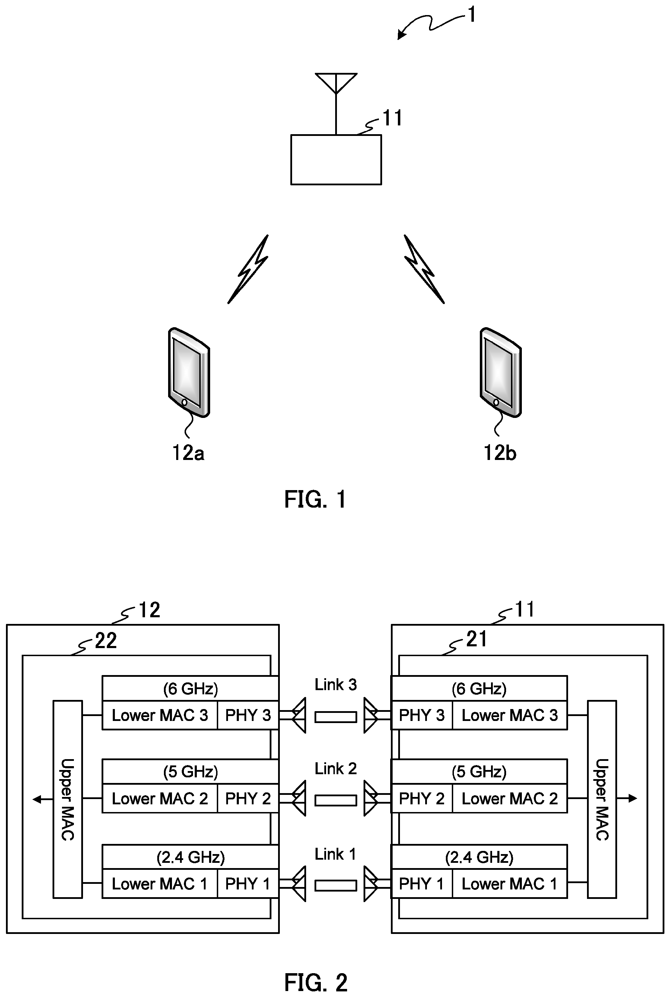

FIG. 1 is a diagram illustrating a configuration example of radio system 1 according to an embodiment of the present disclosure. As illustrated in FIG. 1, radio system 1 includes base station 11 and terminals 12a and 12b.

Base station 11 and terminals 12a and 12b perform radio communication based on wireless LAN. For example, base station 11 and terminals 12a and 12b perform radio communication based on MLO, which is one of the technologies used in IEEE 802.11be.

The numbers of base stations 11 and terminals 12a and 12b are not limited to the example in FIG. 1. Base station 11 may also be referred to as an AP or a communication apparatus. Terminal 12 may also be referred to as an STA or a communication apparatus. In the following, when terminals 12a and 12b are not distinguished from each other, they may be simply referred to as terminal 12.

### <MLO>

FIG. 2 is a diagram for describing MLO. In FIG. 2, the same components as in FIG. 1 are denoted by the same reference numerals.

As illustrated in FIG. 2, base station 11 includes MLD 21. Terminal 12 includes MLD 22. MLD is an abbreviation for multilink device.

MLD 21 includes three physical layers (PHY 1 to PHY 3), three lower MAC layers (Lower MAC 1 to Lower MAC 3), and one upper MAC layer (Upper MAC). Similarly, MLD 22 includes three physical layers (PHY 1 to PHY 3), three lower MAC layers (Lower MAC 1 to Lower MAC 3), and one upper MAC layer (Upper MAC).

MLD 21 and MLD 22 establish up to three links. For example, PHY 1 and Lower MAC 1 of MLD 21 and PHY 1 and Lower MAC 1 of MLD 22 illustrated in FIG. 2 establish a 2.4 GHz link. PHY 2 and Lower MAC 2 of MLD 21 and PHY 2 and Lower MAC 2 of MLD 22 establish a 5 GHz link. PHY 3 and Lower MAC 3 of MLD 21 and PHY 3 and Lower MAC 3 of MLD 22 establish a 6 GHz link. That is, terminal 12 can communicate with base station 11 using three different frequency bands simultaneously.

The number of frequency bands in MLO is not limited to three. The frequency bands used in MLO are not limited to 2.4 GHz, 5 GHz, and 6 GHz. A link may also be referred to as a channel. The Lower MAC layer and the Upper MAC layer may also be referred to as MAC layers.

In the following, for simplicity of description, the number of links in MLO is assumed to be three. Further, the frequency bands of the three links are assumed to be 2.4 GHz, 5 GHz, and 6 GHz. Note that in MLO of IEEE 802.11be, the three frequency bands of 2.4 GHz, 5 GHz, and 6 GHz are used.

### <Communication Schemes in MLO>

As communication schemes in MLO, an aggregation scheme and a duplication scheme are assumed.

### <Communication Schemes in MLO: Aggregation Scheme>

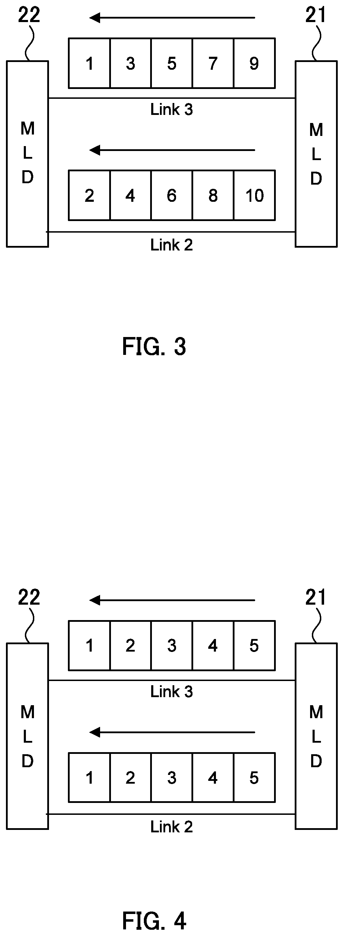

FIG. 3 is a diagram for describing an aggregation scheme in MLO. FIG. 3 illustrates MLD 21 and MLD 22 described with reference to FIG. 2. In FIG. 3, for simplicity of description, the aggregation scheme is described with the number of MLO links set to two.

In the aggregation scheme, different frames are transmitted on a plurality of links in different frequency bands. For example, as illustrated in FIG. 3, frames 1, 3, 5, 7, and 9 are transmitted from MLD 21 to MLD 22 on link 3, and frames 2, 4, 6, 8, and 10 are transmitted from MLD 21 to MLD 22 on link 2. A frame may also be referred to as a packet, data, or signal.

In the aggregation scheme, different frames are transmitted on a plurality of links in different frequency bands, thereby enabling high-speed data communication.

### <Communication Schemes in MLO: Duplication Scheme>

FIG. 4 is a diagram for describing a duplication scheme in MLO. FIG. 4 illustrates MLD 21 and MLD 22 described with reference to FIG. 2. In FIG. 4, for simplicity of description, the duplication scheme is described with the number of MLO links set to two.

In the duplication scheme, the same frame is transmitted on a plurality of links in different frequency bands. For example, as illustrated in FIG. 4, frames 1, 2, 3, 4, and 5 are transmitted from MLD 21 to MLD 22 on link 3, and frames 1, 2, 3, 4, and 5 are also transmitted from MLD 21 to MLD 22 on link 2.

In the duplication scheme, the same frame is transmitted on a plurality of links, thereby enabling improved reliability of data communication.

### <Relationship Between Frequency Bands and Transmission Distance/Transmission Capacity>

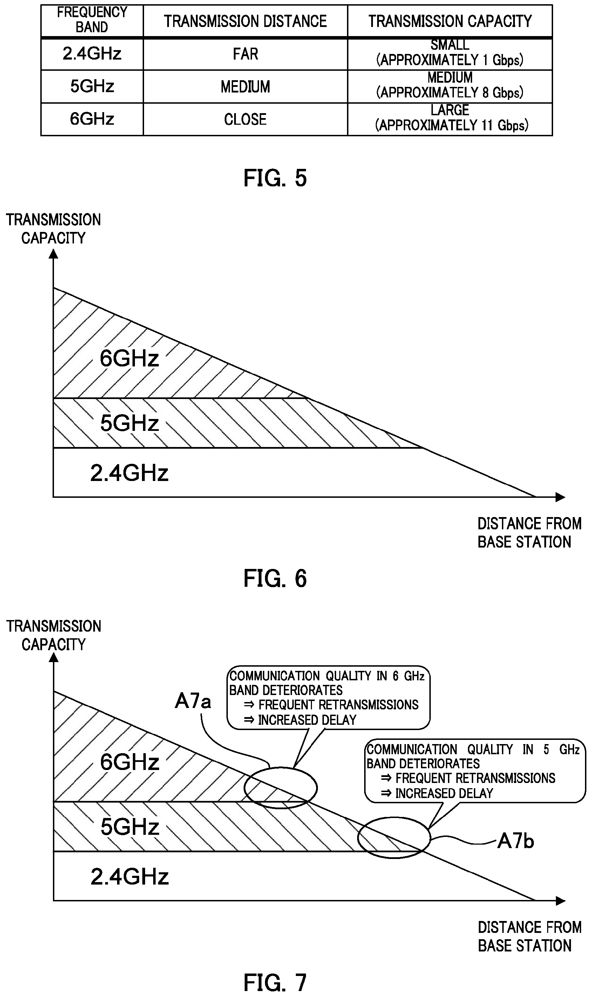

FIGS. 5 and 6 are diagrams illustrating a relationship between frequency bands and transmission distance/transmission capacity. As illustrated in FIGS. 5 and 6, the transmission distance (distance from base station 11) and the transmission capacity differ depending on the frequency band (strictly speaking, there are also factors other than the frequency band).

For example, the transmission distance in the 2.4 GHz frequency band is farther (longer) than the transmission distance in the 5 GHz frequency band. The transmission distance in the 6 GHz frequency band is closer (shorter) than the transmission distance in the 5 GHz frequency band.

For example, the transmission capacity in the 2.4 GHz frequency band is smaller than the transmission capacity in the 5 GHz frequency band. The transmission capacity in the 6 GHz frequency band is larger than the transmission capacity in the 5 GHz frequency band.

### <Consideration>

FIG. 7 is a diagram for describing degradation of communication quality. FIG. 7 illustrates the relationship between frequency bands and transmission distance/transmission capacity illustrated in FIG. 6.

Since terminal 12 moves, the distance from base station 11 varies, becoming closer or farther away. As a result, the communication quality in a plurality of frequency bands (a plurality of links) between base station 11 and terminal 12 changes.

For example, when the distance between base station 11 and terminal 12 is sufficiently short, the communication quality between base station 11 and terminal 12 is favorable, and base station 11 and terminal 12 can communicate using three frequency bands of 6 GHz, 5 GHz, and 2.4 GHz.

When terminal 12 moves away from base station 11 from a state in which the distance between base station 11 and terminal 12 is sufficiently short, the communication quality in the highest 6 GHz frequency band degrades, as illustrated in frame A7a in FIG. 7, for example. In the 6 GHz frequency band, for example, data retransmissions occur frequently and delay increases. Therefore, the transmission efficiency in the 6 GHz frequency band decreases.

Furthermore, as terminal 12 moves further away from base station 11, the communication quality in the 5 GHz frequency band, which is the next highest frequency after 6 GHz, degrades, as illustrated in frame A7b in FIG. 7, for example. In the 5 GHz frequency band, for example, data retransmissions occur frequently and delay increases. Therefore, the transmission efficiency in the 5 GHz frequency band decreases.

Additionally, the transmission efficiency in each frequency band may decrease not only due to the distance between base station 11 and terminal 12, but also due to non-line-of-sight communication caused by obstacles, reflections, noise, and other factors.

Further, when data delay occurs, for example, reordering of IP packets occurs frequently. In real-time transmission of video and audio, reordering of IP packets degrades QoE. Note that IP is an abbreviation for Internet Protocol, and QoE is an abbreviation for Quality of Experience.

Therefore, terminal 12 achieves low-latency and high-capacity transmission when the communication quality is favorable, and suppresses a decrease in transmission efficiency when the communication quality degrades.

### <Switching of Communication Scheme>

Terminal 12 switches between the aggregation scheme and the duplication scheme to suppress a decrease in transmission efficiency. Communication between base station 11 and terminal 12 includes downlink transmission from base station 11 to terminal 12 and uplink transmission from terminal 12 to base station 11. The communication scheme may be determined and switched independently for the downlink and the uplink, respectively. In some embodiments, a case is mainly described in which terminal 12 determines and switches the communication scheme of the uplink transmitted by terminal 12; however, the present disclosure may be applied to other cases as well. For example, base station 11 may determine and switch the communication scheme of the downlink transmitted by base station 11. Further, the communication scheme in the reverse direction may be instructed to the communication partner. For example, terminal 12 may determine the communication scheme of the downlink transmitted from base station 11 and instruct base station 11 on the downlink communication scheme.

### <Switching of Communication Scheme: Switching Based on Signal Strength>

Terminal 12 may switch between the aggregation scheme and the duplication scheme based on signal strength such as RSSI.

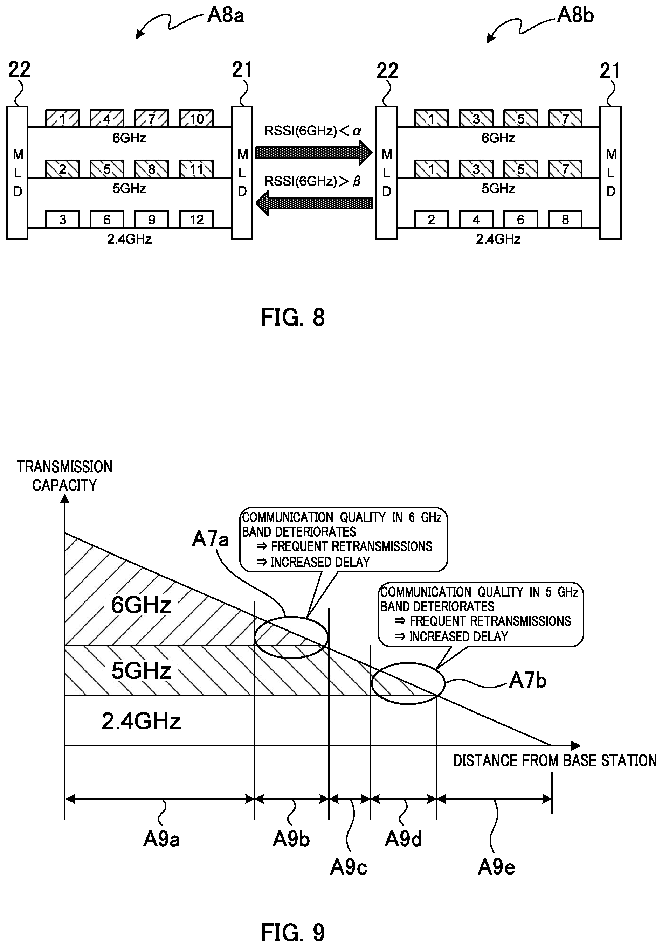

FIG. 8 is a diagram for describing switching of the communication scheme based on signal strength. FIG. 8 illustrates MLD 21 and MLD 22 described with reference to FIG. 2.

Terminal 12 measures the received signal strength of radio waves in each frequency band (each link). When the measured received signal strength in a certain frequency band falls below a predetermined threshold, terminal 12 duplicates the link in the certain frequency band and the link in a frequency band lower than the certain frequency band.

For example, terminal 12 performs radio communication using the aggregation scheme, as indicated by arrow A8a in FIG. 8. When the received signal strength in the 6 GHz band falls below threshold α, terminal 12 duplicates the link in the 6 GHz band and the link in the 5 GHz band, which is the next lower frequency band after 6 GHz (switches to the duplication scheme), as indicated by arrow A8b in FIG. 8. Thereby, terminal 12 improves the reliability of data communication in the 6 GHz band and suppresses a decrease in transmission efficiency.

After switching to the duplication scheme, when the received signal strength in the 6 GHz band exceeds threshold β, terminal 12 switches to the aggregation scheme. Thereby, terminal 12 can achieve high-speed data communication.

Threshold α and threshold β may be the same value (α = β) or different values (α ≠ β). When threshold α and threshold β are set to different values, frequent switching between the aggregation scheme and the duplication scheme is suppressed.

Thresholds are also set for the 5 GHz band in the same manner as for the 6 GHz band. For example, when the received signal strength in the 5 GHz band falls below threshold α1, terminal 12 duplicates the link in the 5 GHz band and the link in the 2.4 GHz band. For example, when the received signal strength in the 5 GHz band exceeds threshold β1, terminal 12 aggregates the link in the 5 GHz band and the link in the 2.4 GHz band.

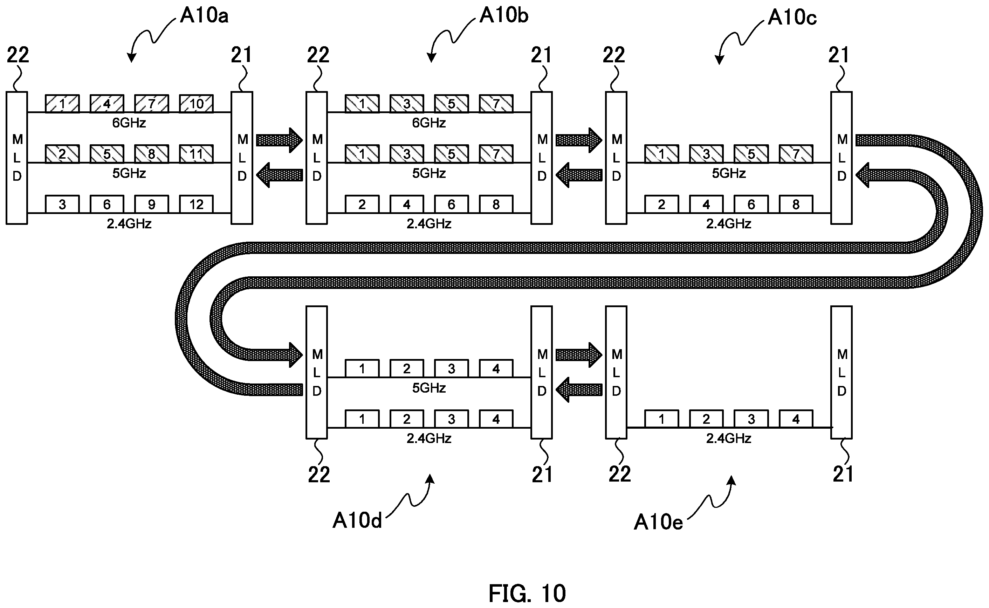

FIGS. 9 and 10 are diagrams for describing switching of the communication scheme when the signal strength (communication quality) decreases according to transmission distance. In FIG. 9, the same components as in FIG. 7 are denoted by the same reference numerals. FIG. 10 illustrates MLD 21 and MLD 22 described with reference to FIG. 2.

At the distance indicated by double-headed arrow A9a in FIG. 9, terminal 12 performs radio communication using the aggregation scheme on the link in the 6 GHz band, the link in the 5 GHz band, and the link in the 2.4 GHz band, as indicated by arrow A10a in FIG. 10.

As described with reference to FIG. 7, for example, the communication quality in a higher frequency band degrades more quickly than in a lower frequency band as the distance between base station 11 and terminal 12 increases. At the distance indicated by double-headed arrow A9b in FIG. 9, the signal strength in the 6 GHz band decreases. At the distance indicated by double-headed arrow A9b in FIG. 9, terminal 12 duplicates the link in the 6 GHz band and the link in the 5 GHz band, as indicated by arrow A10b in FIG. 10. Thereby, terminal 12 improves the reliability of data communication in the 6 GHz band and suppresses a decrease in transmission efficiency.

At the distance indicated by double-headed arrow A9c in FIG. 9, terminal 12 aggregates the link in the 5 GHz band and the link in the 2.4 GHz band, as indicated by arrow A10c in FIG. 10. Thereby, terminal 12 can achieve high-speed data communication.

At the distance indicated by double-headed arrow A9d in FIG. 9, the signal strength in the 5 GHz band decreases. At the distance indicated by double-headed arrow A9d in FIG. 9, terminal 12 duplicates the link in the 5 GHz band and the link in the 2.4 GHz band, as indicated by arrow A10d in FIG. 10. Thereby, terminal 12 improves the reliability of data communication in the 5 GHz band and suppresses a decrease in transmission efficiency.

At the distance indicated by double-headed arrow A9e in FIG. 9, terminal 12 performs radio communication using only the 2.4 GHz band, as indicated by arrow A10e in FIG. 10.

The foregoing describes an example in which, when the received signal strength in a higher frequency band decreases, duplication is performed on the link in the higher frequency band and the link in a lower frequency band; however, the present disclosure is not limited thereto. When the received signal strength in a lower frequency band decreases, duplication may be performed on the link in the lower frequency band and the link in a higher frequency band. For example, when the signal strength in the 6 GHz band and the 2.4 GHz band does not decrease but the signal strength in the 5 GHz band decreases, duplication may be performed on the link in the 5 GHz band and the link in the 6 GHz band.

### <Switching of Communication Scheme: Switching Based on Transmission Delay>

Terminal 12 may switch between the aggregation scheme and the duplication scheme based on transmission delay between links. For example, terminal 12 may switch between the aggregation scheme and the duplication scheme when transmission delay of data occurs due to congestion and reordering of frames between links occurs frequently.

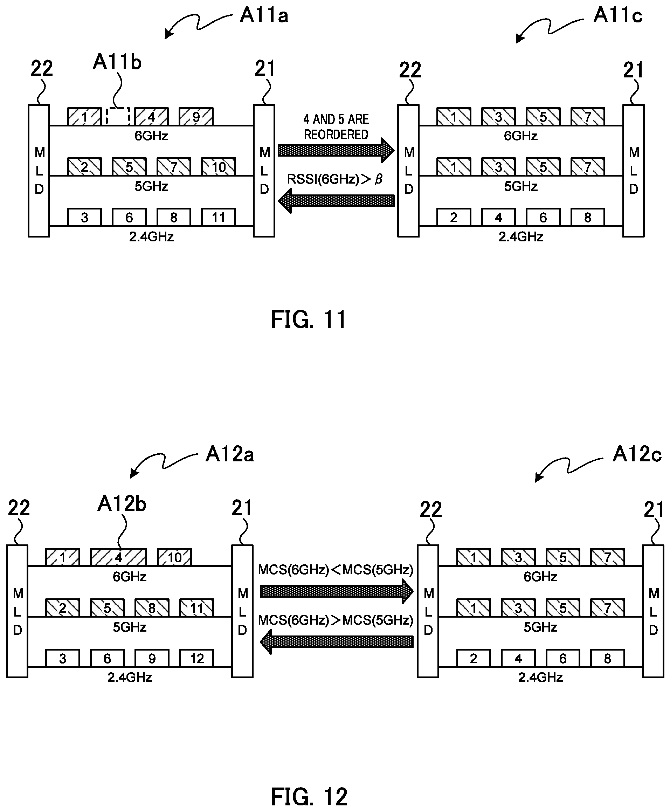

FIG. 11 is a diagram for describing switching of the communication scheme based on transmission delay. FIG. 11 illustrates MLD 21 and MLD 22 described with reference to FIG. 2.

For example, terminal 12 performs radio communication using the aggregation scheme, as indicated by arrow A11a in FIG. 11.

As illustrated in dotted-line frame A11b in FIG. 11, for example, a transmission delay of a frame to base station 11 in the 6 GHz band occurs due to congestion, such as waiting for data transmission by a certain terminal (terminal other than terminal 12). When reordering of frames frequently occurs due to transmission delay, terminal 12 duplicates the link in the 6 GHz band and the link in the 5 GHz band, which is the next lower frequency band after 6 GHz, as indicated by arrow A11c in FIG. 11.

More specifically, when the number of frame reorderings per unit time due to transmission delay in the 6 GHz band exceeds threshold α, terminal 12 duplicates the link in the 6 GHz band and the link in the 5 GHz band, which is the next lower frequency band after 6 GHz, as indicated by arrow A11c in FIG. 11. Thereby, terminal 12 can improve the reliability of data communication in the 6 GHz band.

After switching to the duplication scheme, when the received signal strength in the 6 GHz band exceeds threshold β, terminal 12 switches to the aggregation scheme. Thereby, terminal 12 can achieve high-speed data communication.

In the above description, after switching to the duplication scheme, when the received signal strength in the 6 GHz band exceeds threshold β, terminal 12 switches to the aggregation scheme; however, the present disclosure is not limited thereto. Terminal 12 may switch to the aggregation scheme when the number of frame reorderings per unit time due to transmission delay in the 6 GHz band falls below threshold γ. Threshold α and threshold γ may be the same value (α = γ) or different values (α ≠ γ). When threshold α and threshold γ are set to different values, frequent switching between the aggregation scheme and the duplication scheme is suppressed.

Further, in the example of FIG. 11, terminal 12 duplicates the link in the 6 GHz band and the link in the 5 GHz band; however, terminal 12 may duplicate the link in the 6 GHz band and the link in the 2.4 GHz band.

Further, terminal 12 may, for example, duplicate the link in the 5 GHz band and the link in the 2.4 GHz band or the link in the 6 GHz band when reordering of frames frequently occurs due to transmission delay in the 5 GHz band.

Further, terminal 12 may, for example, duplicate the link in the 2.4 GHz band and the link in the 5 GHz band or the link in the 6 GHz band when reordering of frames frequently occurs due to transmission delay in the 2.4 GHz band.

### <Switching of Communication Scheme: Switching Based on Transmission Rate>

Terminal 12 may switch between the aggregation scheme and the duplication scheme based on the transmission rate (data rate) between links. For example, terminal 12 may switch between the aggregation scheme and the duplication scheme based on a transmission rate determined by MCS, bandwidth, GI, frame loss rate, frame delay, and/or the like. MCS is an abbreviation for Modulation and Coding Scheme, and GI is an abbreviation for Guard Interval.

FIG. 12 is a diagram for describing switching of the communication scheme based on transmission rate. FIG. 12 illustrates MLD 21 and MLD 22 described with reference to FIG. 2.

For example, terminal 12 performs radio communication using the aggregation scheme, as indicated by arrow A12a in FIG. 12.

As illustrated in frame A12b in FIG. 12, for example, when the MCS (coding rate) in the 6 GHz band becomes lower than the MCS in the 5 GHz band, and the transmission rate in the 6 GHz band becomes lower than the transmission rate in the 5 GHz band, terminal 12 duplicates the link in the 6 GHz band and the link in the 5 GHz band, which is the next lower frequency band after 6 GHz, as indicated by arrow A12c in FIG. 12. Thereby, terminal 12 can improve the reliability of data communication in the 6 GHz band.

After switching to the duplication scheme, when the MCS in the 6 GHz band becomes higher than the MCS in the 5 GHz band, and the transmission rate in the 6 GHz band becomes higher than the transmission rate in the 5 GHz band, terminal 12 switches to the aggregation scheme. Thereby, terminal 12 can achieve high-speed data communication.

Note that when the transmission rate in the 5 GHz band becomes lower than the transmission rate in the 2.4 GHz band, terminal 12 duplicates the link in the 5 GHz band and the link in the 2.4 GHz band. Thereby, terminal 12 can improve the reliability of data communication in the 5 GHz band. After duplicating the link in the 5 GHz band and the link in the 2.4 GHz band, when the transmission rate in the 5 GHz band becomes higher than the transmission rate in the 2.4 GHz band, terminal 12 switches to the aggregation scheme. Thereby, terminal 12 can achieve high-speed data communication.

### <Switching of Communication Scheme: Switching by APL Cooperation>

Terminal 12 may switch between the aggregation scheme and the duplication scheme in cooperation with an application (APL). In order to enable APL to instruct terminal 12 to perform switching, terminal 12 includes an interface for externally instructing the aggregation scheme or the duplication scheme. For the interface for instructing switching of the communication scheme, an interface for a data plane or an interface for a control plane is used. Typically, in the former case, control is performed through the Media Access Control (MAC) layer Service Access Point (SAP), and in the latter case, control is performed through the MAC Layer Management Entity (MLME).

### - When movement and stopping of terminal 12 are controlled

For example, when terminal 12 is a robot or the like, and the movement and stopping of terminal 12 are controlled by APL, terminal 12 switches the communication scheme from the aggregation scheme to the duplication scheme before terminal 12 starts moving based on APL. Terminal 12 may duplicate two of the three links, or may duplicate all three links. Thereby, terminal 12 can improve the reliability of communication even when the communication quality degrades due to movement of terminal 12, for example.

After completion of a stop of terminal 12 based on APL, terminal 12 switches the communication scheme from the duplication scheme to the aggregation scheme. Thereby, terminal 12 can achieve high-speed data communication.

Note that the control of movement and stopping of terminal 12 based on APL may be performed by an external apparatus separate from terminal 12.

### - When movement and stopping of terminal 12 are not controlled

For example, when terminal 12 is a smartphone, a wearable camera, or the like, and the movement and stopping of terminal 12 are not controlled by APL, terminal 12 determines the movement and stopping of terminal 12 based on GPS location information or an acceleration signal from an acceleration sensor, and switches the communication scheme from the aggregation scheme to the duplication scheme. GPS is an abbreviation for global positioning system.

For example, when terminal 12 transitions from a stopped state to a moving state, terminal 12 switches the communication scheme from the aggregation scheme to the duplication scheme. Thereby, terminal 12 can improve the reliability of communication even when the communication quality degrades due to movement of terminal 12, for example.

For example, when terminal 12 transitions from a moving state to a stopped state, terminal 12 switches the communication scheme from the duplication scheme to the aggregation scheme. Thereby, terminal 12 can achieve high-speed data communication.

### <Switching of Communication Scheme: Switching at GOP Boundary of Video Frames>

Terminal 12 may switch the communication scheme at a group of pictures (GOP) boundary of a video frame. In other words, terminal 12 need not switch the communication scheme at a point other than GOP boundaries of a video frame. Thereby, terminal 12 can provide, for example, stable video without distortion.

### <Switching of Communication Scheme: Switching Based on I-Picture>

Terminal 12 may transmit an I-picture of video using the duplication scheme. Thereby, terminal 12 can improve the reliability of video playback.

### <APL Operation When Communication Scheme Is Switched>

When the communication scheme is switched due to movement of terminal 12, APL may perform the following operations.

When the communication scheme is switched, an APL for video transmission changes an encoding amount, a frame rate, and a video resolution.

For example, when the communication scheme is switched from the aggregation scheme to the duplication scheme, the APL for video transmission lowers the video resolution.

For example, when the communication scheme is switched from the duplication scheme to the aggregation scheme, the APL for video transmission transmits low-priority data, such as high-layer data of Scalable Video Coding (SVC) and P/B pictures of GOP.

Note that when terminal 12 switches the communication scheme, terminal 12 may notify the APL that the communication scheme has been switched. The notification is performed, for example, through the MLME of the control plane. As a result, not only when the APL instructs to switch the communication scheme, but also when terminal 12 autonomously determines and switches the communication scheme, the APL can know the state of terminal 12, enabling appropriate control to be performed thereafter. The APL may be implemented in terminal 12 or may be implemented in a separate apparatus on the upstream side of base station 11 (apparatus that is the communication partner of terminal 12). The APL may control the communication volume of video data in response to a notification from terminal 12.

### <Multi-Stage Switching of Communication Scheme>

Terminal 12 may switch the communication scheme in multiple stages using FEC, rather than just two stages of the aggregation scheme and the duplication scheme. FEC is an abbreviation for Forward Error Correction. The FEC may be performed on a frame-by-frame basis.

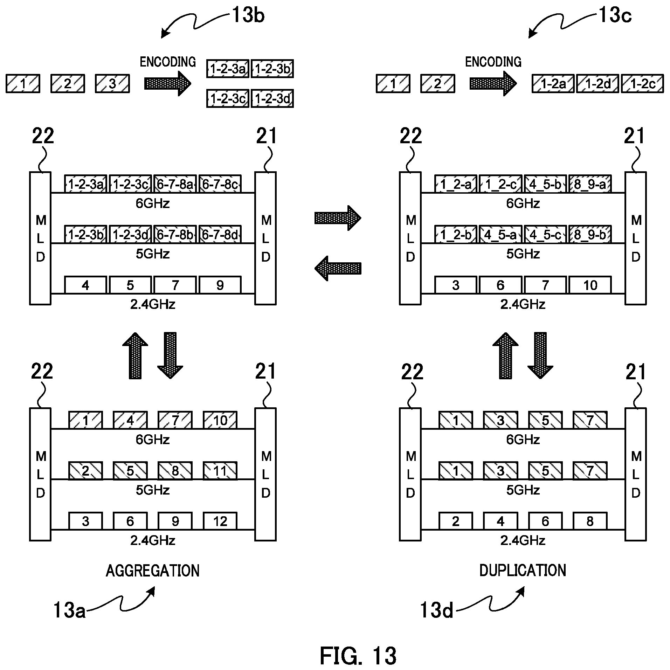

FIG. 13 is a diagram for describing multi-stage switching of the communication scheme. FIG. 13 illustrates MLD 21 and MLD 22 described with reference to FIG. 2.

Arrow A13a in FIG. 13 indicates a communication scheme in the aggregation scheme. Arrow A13b indicates a communication scheme at a coding rate of 3/4. Arrow A13c indicates a communication scheme at a coding rate of 2/3. Arrow A13d indicates a communication scheme in the duplication scheme.

Terminal 12 switches, for example, between a communication scheme in the aggregation scheme, a communication scheme at a coding rate of 3/4, a communication scheme at a coding rate of 2/3, and a communication scheme in the duplication scheme, based on the MCS and/or loss rate (retransmission rate) in each frequency band. Terminal 12 may calculate an optimal coding rate based on the MCS and/or loss rate (retransmission rate) in each frequency band, and switch the communication scheme in multiple stages.

Communication reliability improves in the order of the communication scheme in the aggregation scheme, the communication scheme at a coding rate of 3/4, the communication scheme at a coding rate of 2/3, and the communication scheme in the duplication scheme. Communication speed improves in the order of the communication scheme in the duplication scheme, the communication scheme at a coding rate of 2/3, the communication scheme at a coding rate of 3/4, and the communication scheme in the aggregation scheme.

In the above, an example has been described in which two communication schemes at different coding rates are added to the aggregation scheme and the duplication scheme to perform switching in four stages; however, the present disclosure is not limited thereto. Three or more communication schemes at different coding rates may be added.

In the above description, the multi-stage switching of the communication scheme is performed based on the MCS and/or loss rate (retransmission rate); however, the multi-stage switching of the communication scheme may be performed based on at least one of transmission delay, transmission rate, and moving speed of terminal 12.

### <Processing Layers>

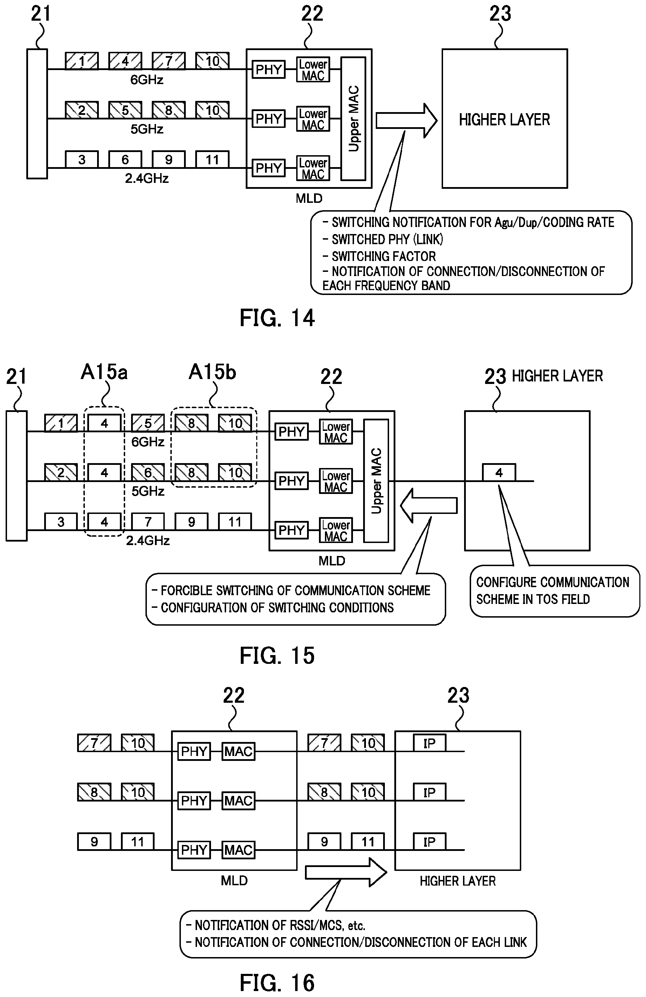

FIG. 14 is a diagram for describing Part 1 of processing layers. FIG. 14 illustrates MLD 21 and MLD 22 described with reference to FIG. 2, and higher layer 23. Higher layer 23 may be, for example, a layer higher than the MAC layer of MLD 22, such as a network layer (e.g., IP), a transport layer (e.g., TCP), a presentation layer (e.g., video codec), and an APL layer.

When switching the communication scheme, MLD 22 (MAC layer) notifies higher layer 23 of information such as the switched communication scheme, a switched link, a switching factor, and/or connection and disconnection of each frequency band (each link).

When the communication scheme is switched, for example, transmission capacity between base station 11 and terminal 12 changes. Based on the information notified from MLD 22, higher layer 23 such as an APL layer changes the amount of data communicated by terminal 12, for example.

While it has been described above that MLD 22 notifies higher layer 23 of information such as the switched communication scheme, the switched link, the switching factor, and/or connection and disconnection of each frequency band, the present disclosure is not limited thereto. Middleware or a controller separate from MLD 22 may notify higher layer 23 of the aforementioned information.

FIG. 15 is a diagram for describing Part 2 of the processing layers. In FIG. 15, the same components as in FIG. 14 are denoted by the same reference numerals.

Higher layer 23 stores information for switching (forcibly switching) the communication scheme in a predetermined field of an IP packet (e.g., TOS field, DSCP field, Diffserv field, or ECN field). MLD 22 (Upper MAC) refers to the predetermined field of the IP packet and switches the communication scheme. The information for switching the communication scheme may explicitly instruct the communication scheme, or may implicitly instruct the communication scheme using QoS information such as priority or other classification information. Since IP packets are transmitted as the payload of MAC layer frames, the switching instruction is performed through the MAC SAP of the data plane.

For example, higher layer 23 stores information for switching the communication scheme in the TOS field of the IP packet. When the TOS field indicates priority, interpreting a specific value of priority as a communication scheme instruction at the MAC layer makes it possible to implicitly instruct the communication scheme. For example, the MAC layer interprets the header of an IP packet, which is a payload of a MAC frame, and sets an access category (AC) or a Traffic Identifier (TID) in the MAC layer to a corresponding value according to the value of the TOS field contained therein. When the value of the TOS field indicates a high priority (i.e., when the set AC or TID indicates a high priority), it may be determined that the importance of data is high and the communication scheme may be switched to the duplication scheme, and when the value of the TOS field indicates a low priority (i.e., when the set AC or TID indicates a low priority), it may be determined that the importance of data is low and the communication scheme may be switched to the aggregation scheme. More specifically, when the set AC is AC_VO (Voice), the communication scheme may be set to the duplication scheme as high priority, and when the set AC is AC_BE (Best Effort), the communication scheme may be set to the aggregation scheme as low priority. For example, MLD 22 refers to the TOS field of the IP packet and switches from the aggregation scheme to the duplication scheme, as indicated by dotted-line frame A15a in FIG. 15. For example, MLD 22 refers to the TOS field of the IP packet and switches from the aggregation scheme to the duplication scheme, as indicated by dotted-line frame A15b in FIG. 15. TOS is an abbreviation for type of service.

Specific control of switching the communication scheme may be performed, for example, using Traffic Identifier (TID)-To-Link Mapping (TTLM) of MLO as follows. A first TID is assigned to data with high importance, the first TID is mapped to a plurality of links, and the same data frame (MAC Protocol Data Unit (MPDU)) is transmitted on all of the plurality of links. Thus, the data to which the first TID is assigned is transmitted using the duplication scheme. A second TID is assigned to data with low importance, and the second TID is mapped to only one link. A third TID is assigned to data with medium importance, and the third TID is mapped to a plurality of links; however, the same data (MPDU) is transmitted on only one link except in the case of retransmission. Thus, the data to which the third TID is assigned is transmitted using the aggregation scheme. At the time of retransmission, the data may be retransmitted on a link other than the first transmission link among the plurality of mapped links. In this way, when a plurality of types of data streams are transmitted, the communication scheme can be individually configured to the duplication scheme or the aggregation scheme for each type indicated by the TID. Note that the configuration of the communication scheme for each data stream is not limited to the method based on the TID, and may be based on other attributes related to the data stream, such as AC, Traffic Stream ID (TSID), or SCS identifier (SCSID) used in Stream Classification Service (SCS).

Note that "forcibly switching" may be interpreted as, for example, switching performed by higher layer 23 such as an APL layer. For example, "forcibly switching" may be interpreted as switching that is not based on signal strength, transmission delay (frame reordering), and/or transmission rate.

Higher layer 23 configures the conditions for switching the communication scheme in MLD 22. For example, higher layer 23 configures thresholds for signal strength, transmission delay (frame reordering), and/or transmission rate.

In the above description, higher layer 23 performs forcible switching of the communication scheme and/or configuration of switching conditions, with the IP example being specifically illustrated; however, the present disclosure is not limited thereto. For example, a field indicating the type of encoded video data in a presentation layer as higher layer 23 may implicitly instruct switching, and the MAC layer may perform switching based thereon; or middleware or a controller separate from higher layer 23 may perform forcible switching of the communication scheme and/or configuration of switching conditions. For example, a controller in the terminal referred to as a station management entity (SME) may determine the communication scheme based on the operation of an application or external conditions, and may instruct the MAC layer on the communication scheme through the MLME. As a specific example, the following procedure may be applied. An instruction of the communication scheme and a TID corresponding to an SCS stream are included in a basic command (primitive) for requesting addition or modification of the SCS stream corresponding to a specific SCSID. The SME issues the primitive to the MLME. When configuring the communication scheme for transmission data, the MAC layer transmits data of the SCS stream in the instructed communication scheme using a plurality of links when the plurality of links are mapped to the corresponding TID. In addition, when instructing the communication scheme for reception data, the MAC layer includes the communication scheme instructed through the MLME in an SCS request frame, transmits the SCS request frame to the communication partner, and instructs the communication partner to switch the communication scheme.

FIG. 16 is a diagram for describing Part 3 of the processing layers. In FIG. 16, the same components as in FIG. 14 are denoted by the same reference numerals.

The switching of the communication scheme may be performed by higher layer 23. In this case, the Upper MAC layer (Upper MAC) of MLD 22 may be omitted, as illustrated in FIG. 16.

MLD 22 notifies higher layer 23 of information such as signal strength, transmission delay (frame reordering), transmission rate, and/or connection and disconnection of each link. Higher layer 23 switches the communication scheme based on these pieces of information. Higher layer 23 switches the communication scheme, for example, on an IP packet basis.

Although it has been described above that higher layer 23 performs switching of the communication scheme, the present disclosure is not limited thereto. Middleware or a controller separate from MLD 21 and higher layer 23 may perform switching of the communication scheme.

### <Hardware Configuration>

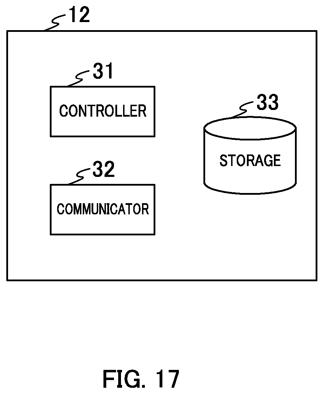

FIG. 17 is a diagram illustrating an exemplary hardware configuration of terminal 12. As illustrated in FIG. 17, terminal 12 includes controller 31, communicator 32, and storage 33.

Controller 31 controls the entire terminal 12. Controller 31 may be configured by, for example, a processor such as a central processing unit (CPU). The functions of MLD 22 may be realized by controller 31.

Communicator 32 communicates with base station 11. For example, communicator 32 communicates with base station 11 using the aggregation scheme and the duplication scheme. Communicator 32 also communicates with an apparatus that is the communication partner of terminal 12.

Storage 33 stores programs of an operating system (OS), middleware programs, and application programs to be executed by controller 31. Storage 33 also stores various data necessary for processing by controller 31. Storage 33 may be, for example, a solid state drive (SSD), Random Access Memory (RAM), flash memory, Read Only Memory (ROM), and/or hard disk drive (HDD).

### <Summary of Present Disclosure>

As described above, terminal 12 switches between the aggregation scheme and the duplication scheme on a plurality of links in different frequency bands. By this operation, terminal 12 can suppress a decrease in transmission efficiency in MLO.

### <Variations>

In the above description, terminal 12 performs switching of the communication scheme; however, the present disclosure is not limited thereto. Base station 11 may perform switching of the communication scheme. Both base station 11 and terminal 12 may perform switching of the communication scheme.

Although the embodiment has been described above with reference to the drawings, the present disclosure is not limited to the example. Obviously, a person skilled in the art would arrive at variations and modifications within a scope described in claims. It is understood that these variations and modifications are within the technical scope of the present disclosure. In addition, the components in the embodiment may be optionally combined without departure from the spirit of the present disclosure. For example, base station 11 may switch the communication scheme by combining two or more of signal strength, transmission delay, transmission rate, APL cooperation, video frame, and I-picture.

In the description of the embodiment described above, the term, such as "part" or "portion" or the term ending with a suffix, such as "-er" "-or" or "-ar" may be replaced with another term, such as "circuit (circuitry)," "device," "unit," or "module."

The present disclosure can be realized by software, hardware, or software in cooperation with hardware. Each functional block used in the description of each embodiment described above can be partly or entirely realized as an LSI such as an integrated circuit, and each process described in each embodiment may be controlled partly or entirely by one LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a communication function (collectively referred to as a communication apparatus). The communication apparatus may include a radio transmitter/receiver (transceiver) and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

The disclosure of Japanese Patent Application No. 2023-212404, filed on December 15, 2023, including the specification, drawings and abstract, is incorporated herein by reference in its entirety.

### Industrial Applicability

The present disclosure is useful for a wireless LAN using MLO.

### Reference Signs List

1 Radio system
11 Base station
12, 12a, 12b Terminal
21, 22 MLD
23 Higher layer
31 Controller
32 Communicator
33 Storage

## Claims

1. A communication apparatus, comprising:
a communicator, which in operation, includes a first communication scheme for transmitting different frames on a plurality of links in different frequency bands, and a second communication scheme for transmitting identical frames on the plurality of links in different frequency bands; and
a controller, which in operation, switches between the first communication scheme and the second communication scheme based on communication quality on each of the plurality of links.

2. The communication apparatus according to claim 1, wherein
the controller switches between the first communication scheme and the second communication scheme based on signal strength, frame reordering, or a transmission rate on each of the plurality of links.

3. The communication apparatus according to claim 1, wherein
the controller further switches between the first communication scheme and the second communication scheme based on movement and stopping of the communication apparatus.

4. The communication apparatus according to claim 1, wherein
the controller further switches between the first communication scheme and the second communication scheme at a boundary of a group of pictures (GOP) of a video frame.

5. The communication apparatus according to claim 1, wherein
the controller switches to the second communication scheme when an I-picture of a video frame is to be transmitted.

6. The communication apparatus according to claim 1, wherein
the controller switches among the first communication scheme, the second communication scheme, and a third communication scheme for transmitting a frame by changing a coding rate.

7. The communication apparatus according to claim 1, wherein
the switching between the first communication scheme and the second communication scheme is a function of a Medium Access Control (MAC) layer.

8. The communication apparatus according to claim 1, wherein
the switching between the first communication scheme and the second communication scheme is a function of a layer higher than a MAC layer.

9. A communication method, comprising:
including, by a communication apparatus, a first communication scheme for transmitting different frames on a plurality of links in different frequency bands, and a second communication scheme for transmitting identical frames on the plurality of links in different frequency bands; and
switching, by the communication apparatus, between the first communication scheme and the second communication scheme based on communication quality on each of the plurality of links.
